# EUROPEAN PATENT APPLICATION

(11) **EP 3 064 271 A1**
(43) Date of publication of application: **07.09.2016**
(21) Application number: 14857273.8
(22) Date of filing: 01.09.2014
(51) Int. Cl.: B01J 27/188, H01M 4/90

(54) **HYDROGEN OXIDATION CATALYST**

(30) Priority: 01.11.2013 JP 2013228775
(71) Applicant: TOYOTA JIDOSHA KABUSHIKI KAISHA, Toyota-shi, Aichi-ken 471-8571 (JP)
(72) Inventor: SADAKANE, Masahiro, Higashihiroshima-shi Hiroshima 739-0046 (JP); SANO, Tsuneji, Higashihiroshima-shi Hiroshima 739-0046 (JP); NAKANISHI, Haruyuki, Toyota-shi Aichi 471-8571 (JP)
(74) Representative: Raynor, Stuart Andrew
(86) International application number: PCT/JP2014/072926
(87) International publication number: WO 2015/064198

(57) **Abstract**

A hydrogen oxidation catalyst which is formed of a Dawson-type polyoxometalate compound represented by general formula (I). Xₐ[P₂M_{b}O₆₁Ru_{c}(L)_{d}] (I) (In the formula, X represents a monovalent cation independently selected from among an alkali metal cation, a tetraalkyl ammonium cation and a tetraalkyl phosphonium cation; M represents a transition metal independently selected from among V, Nb, Mo and W; L represents a ligand independently selected from among H₂O and an organic ligand, provided that at least one L is H₂O; a represents the number of cations (X) necessary for neutralizing the electrical charge of the compound as a whole; b represents an integer of 12-17 and c represents an integer of 1-6, provided that the total of b and c is equal to 18; and d represents an integer that is equal to c.)

## Description

### Technical Field

The present invention relates to a hydrogen oxidation catalyst capable of oxidizing a hydrogen molecule (H₂) to hydrogen ions (H⁺), and more particularly, it relates to a hydrogen oxidation catalyst formed of a specific ruthenium-containing polyoxometalate compound.

### Background Art

Fuel cells are devices for extracting electric energy from fuels such as hydrogen and ethanol by an electrochemical reaction, and have a low environmental load due to their low carbon dioxide emission, and therefore have attracted attention in recent years. In fuel cells, platinum fine particles and platinum compounds are generally known as a catalyst or mediator for promoting a hydrogen oxidation reaction (i.e., a reaction represented by formula (1) below, in which hydrogen molecule (H₂) is oxidized to hydrogen ions (H⁺)) and oxygen reducing reaction (i.e., a reaction represented by formula (2) below, in which an oxygen molecule reacts with hydrogen ions and electrons to produce water).

H² → 2H⁺ + 2e⁻ (1)

O₂ + 4H⁺ + 4e⁻ → 2H₂O (2)

However, platinum is very expensive. Also, in fuel cells, the precipitation of platinum as platinum particles causes the degradation of the components of the fuel cell, including the platinum catalyst, electrolyte membrane, and others (Patent Literature 1). Accordingly, as a material capable of oxidizing hydrogen a material which is alternative to platinum or is free of platinum is required. Although Patent Literature 2 describes a redox fuel cell in which a catholyte solution containing a polyoxometalate redox couple is at least partially reduced at the cathode in operation of the cell, and is at least partially re-generated by reaction with an oxidant after the reduction at the cathode, it does not describe that the redox couple has hydrogen-oxidizing ability.

### Citation List

### Patent Literature

Patent Literature 1: Japanese Unexamined Patent Publication No. 2009-289681
Patent Literature 2: Japanese Unexamined Patent Publication No. 2010-541127

### Summary of Invention

### Problems to be Solved by the Invention

The present inventors have made intensive research with a view to solve the above problems, and as a result have found that a specific ruthenium-containing polyoxometalate compound has hydrogen-oxidizing ability and is useful as hydrogen oxidation catalyst.

### Solution to Problem

The present invention provides a hydrogen oxidation catalyst which is formed of a Dawson-type polyoxometalate compound represented by general formula (I) :

Xₐ[P₂M_{b}O₆₁Ru_{c}(L)_{d}] (I)

wherein X represents a monovalent cation independently selected from an alkali metal cation, a tetraalkyl ammonium cation and a tetraalkyl phosphonium cation;
M represents a transition metal independently selected from vanadium (V), niobium (Nb), molybdenum (Mo) and tungsten (W);
L represents a ligand independently selected from H₂O and an organic ligand, provided that at least one L is H₂O;
a represents the number of cations X needed for the electrical charge of the overall compound to be neutral;
b is an integer of from 12 to 17 and c is an integer of from 1 to 6, provided that the total of b and c is equal to 18; and
d is an integer which is equal to c.

In the above general formula (I), X is a monovalent cation independently selected from alkali metal cations, preferably lithium ion, sodium ion, potassium ion, and rubidium ion; quaternary ammonium cations, preferably tetraalkylammonium cations, such as tetramethylammonium cation, tetraethylammonium cation, and tetrabutylammonium cation; and quaternary phosphonium cations, preferably tetraalkylphosphonium cations, such as tetramethylphosphonium cation, tetraethylphosphonium cation, and tetrabutylphosphonium cation.

M is a transition metal independently selected from vanadium (V), niobium (Nb), molybdenum (Mo) and tungsten (W), and M is preferably tungsten (W).

L is a ligand independently selected from H₂O and organic ligands such as pyridine and sulfoxide derivatives (such as dimethyl sulfoxide), provided that at least one L is H₂O. L is preferably H₂O. While not wishing to be bound by any theory, it is believed that the part on the ruthenium atom to which H₂O coordinates as a ligand is an active site. Accordingly, the polyoxometalate compound of the present invention has at least one H₂O as ligand L.

"a" is the number of cations X needed for the electrical charge of the overall polyoxometalate compound to be neutral. The number b of metal M is an integer of 12 to 17, and the number c of ruthenium is an integer of 1 to 6, provided that the total of the number b of metal M and the number c of ruthenium is equal to 18. The number d of the ligand is an integer which is equal to the number c of ruthenium.

In one preferred embodiment of the present invention, examples of the Dawson-type polyoxometalate compound represented by the above general formula (I) are K₇ [(α₁-P₂W₁₇O₆₁Ru (H₂O)] and K₇ [α₂-P₂W₁₇O₆₁Ru (H₂O)]. In a more preferred embodiment of the present invention, examples of the polyoxometalate compound represented by the above general formula (I) is K₇ [α₁-P₂W₁₇O₆₁Ru (H₂O)].

### Effects of the Invention

According to the present invention, a hydrogen oxidation catalyst having hydrogen oxidizing ability is provided.

### Brief Description of Drawings

FIG. 1(a) represents the fundamental structure of a Dawson-type polyoxometalate anion [α-P₂W₁₈O₆₂]⁶⁻, FIG. 1(b) represents the structure of [α₁-P₂W₁₇O₆₁Ru]⁷⁻ which is one example of α₁-isomers of [α-P₂W₁₈O₆₂]⁶⁻, and FIG. 1(c) represents the structure of [α₂-P₂W₁₇O₆₁Ru]⁷⁻ which is one example of α₂-isomers of [α-P₂W₁₈O₆₂]⁶⁻.
FIG. 2 represents the cyclic voltammogram of K₇[α₁-P₂W₁₇O₆₁Ru (H₂O)] as determined in 0.5M H₂SO₄.

### Description of Embodiments

The embodiments of the present invention will be described with reference to the drawings.

As described above, the present invention provides a catalyst formed of a specific polyoxometalate compound containing ruthenium.

The structure of Dawson-type polyoxometalates is briefly described as follows. Dawson-type polyoxometalates have a plurality of octahedral fundamental units in which six oxide ions (O²⁻) coordinate to metal M, and there exist isomers of α-form, β-form, γ-form, δ-form, ε-form, etc., depending whether adjacent octahedrons share edges or not or whether adjacent octahedrons share apexes or not. The Dawson-type polyoxometalate compounds have a structure in which 18 octahedrons are condensed so as to share apexes, and have M and two atoms such as boron, silicon, sulfur, and phosphorus, incorporated in the structure. Generally, both ends in the molecular long axis direction of this compound are referred to as cap regions and the site located between the two cap regions is referred to as a belt region.

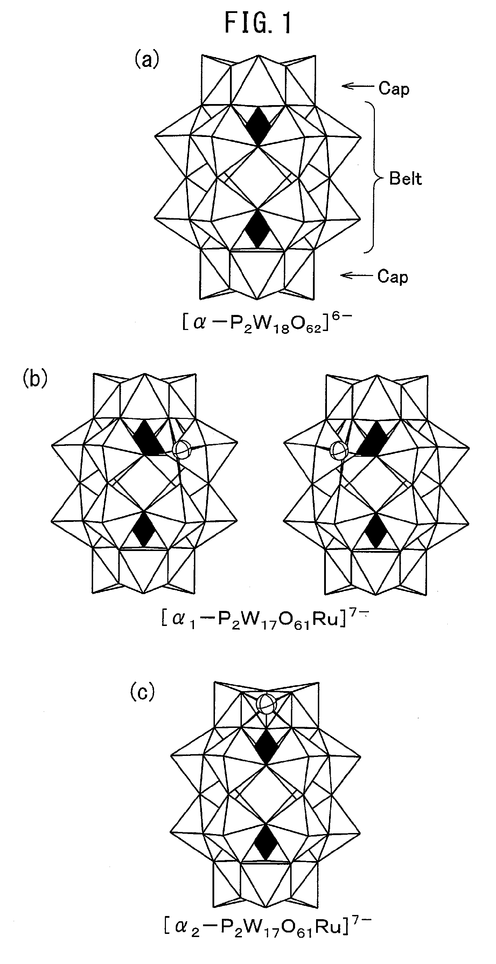

Next, FIG. 1(a) illustrates the fundamental structure of Dawson-type polyoxometalates, taking [α-P₂W₁₈O₆₂]⁶⁻ as an example. As illustrated in FIG. 1(a), [α-P₂W₁₈O₆₂]⁶⁻ has two regions referred to as caps, and a region located between them, called as a belt. An isomer in which one tungsten present in the belt region is substituted with another atom (in FIG. 1(b), ruthenium (Ru(III))) as shown in FIG. 1(b) is α₁-isomer (i.e., [α₁-P₂W₁₇O₆₁Ru]⁷⁻), and an isomer in which the tungsten present in a cap region is substituted with another atom (in FIG. 1(c), ruthenium (Ru(III))) as shown in FIG. 1(c) is α₂-isomer (i.e., [α₂-P₂W₁₇O₆₁Ru]⁷⁻). The α₁-isomer is racemic. In FIGS. 1(b) and (c), octahedrons represent a fundamental unit in which six oxide ions (O²⁻) coordinate to tungsten (W⁶⁺), and tetrahedrons (black colored regions) represent another fundamental unit in which phosphorus (P) shares oxygen with tungsten which constitutes the octahedrons. In addition, in FIGS. 1(b) and (c), ruthenium is represented as a spherical body so that the position of the ruthenium is easily recognized. Although not shown in FIGS. 1(a), (b), and (c), in the polyoxometalate compound of the present invention, ligands are coordinated to the ruthenium atom.

Although the ruthenium-containing polyoxometalate compound of the present invention has been explained with reference to FIGS. 1(a), (b), and (c), the present invention is not limited to the compounds shown in FIGS. 1(b) and (c). Ruthenium may be present in both cap regions and belt region.

The method for preparing the ruthenium-containing polyoxometalate compound of the present invention is not particularly limited as long as the tungsten in the corresponding precursor can be substituted with ruthenium, and ligands independently selected from H₂O and an organic ligand can coordinate to the ruthenium. For example, K₁₀[α₁-P₂W₁₇O₆₁Ru(H₂O)], which is a preferred ruthenium-containing polyoxometalate compound of the present invention, can be obtained by, for example, preparing K₁₀[α₂-P₂W₁₇O₆₁]·15H₂O via a well-known method (R. Contant, W. G. Klemperer, O. Yaghi, Inorg. Synth. 1990, 27, 104-118.), reacting the resulting K₁₀[α₂- P₂W₁₇O₆₁] ·15H₂O with Ru₂ (benzene)₂Cl₄ to synthesize K₇[P₂W₁₇O₆₁Ru^{III}(H₂O)] (a mixture of α₁-form and α₂-form), and subsequently, reacting the resulting K₇[P₂W₁₇O₆₁Ru^{III}(H₂O)] (a mixture of α₁-form and α₂-form) and dimethyl sulfoxide (dmso) to form K₈[P₂W₁₇O₆₁Ru^{II}(dmso)] (a mixture of α₁-form and α₂-form), purifying it using the solubility difference to obtain K₈[α₁-P₂W₁₇O₆₁Ru^{II} (dmso)] (α₁-form only), and heating K₈[α₁-P₂W₁₇O₆₁Ru^{II} (dmso)] (α₁-form only) in water to exchange dmso with water.

The hydrogen oxidation catalyst formed of the polyoxometalate compound of the present invention can be used after being supported on a carrier, for example, oxides such as silica, alumina, magnesia, and titania; carbon materials such as activated carbon and carbon nanotube; etc. The type, shape, and dimensions of the carrier can be appropriately selected according to the usage of the catalyst.

### Examples

The present invention will be further explained with reference to the following examples, and it should be understood that the scope of the present invention is not limited by these examples.

### <Synthesis for K₇α₁-P₂W₁₇O₆₁Ru (H₂O) (α₁-form)>

K₇α₁-P₂W₁₇O₆₁Ru (H₂O) (α₁-form) was synthesized via synthesis steps 1 to 4 as follows.

### Synthesis step 1: Synthesis for K₁₀[α₂-P₂W₁₇O₆₁] ·15H₂O

K₁₀[α₂- P₂W₁₇O₆₁] ·15H₂O was prepared via a well-known method (R. Contant, W. G. Klemperer, O. Yaghi, Inorg. Synth. 1990, 27, 104-118.)

### Synthesis step 2: Synthesis for K₇[P₂W₁₇O₆₁Ru^{III} (H₂O)] (a mixture of α₁-form and α₂-form)

Ru₂ (benzene)₂Cl₄ (0.085 g, 0.17 mmol), K₁₀[α₂-P₂W₁₇O₆₁] ·15H₂O (1.592 g, 0.33 mmol), and water (20 mL) were charged into a 100 mL Teflon@ inner tube-type autoclave, and were allowed to react for 5 hours at 170°C. After cooling the autoclave, the resulting solution was filtered, a 15 ml of acetone was added to the resulting filtrate, and the resulting mixture was agitated for one hour at room temperature. The precipitates generated were separated out by centrifugal separation, and a 100 mL of acetone was added to the resulting liquid. The mixture thus obtained was agitated for 30 minutes at room temperature to obtain a dark-brown liquid. The dark-brown liquid was allowed to stand for overnight in a refrigerator. The solid matters precipitated during standing were filtered out, and the solid matters were washed with a 100 mL of acetone and dried at 70°C to obtain K₇[P₂W₁₇O₆₁Ru^{III} (H₂O)] (a mixture of α₁-form and α₂-form) (yield: 0.67 g, yield percentage: 42% (weight basis)).

### Analysis results:

IR (KBr): ν = 1090 (s), 1079 (s), 1055 (sh), 1014 (m), 950 (s), 915 (s), 817 (sh), 777 (vs) cm⁻¹. Cyclic voltammogram (in 0.5M KH₂PO₄ aqueous solution (pH 4.3)): E_{1/2} (Ru^{V/IV}) = 1068 mV, E_{1/2} (Ru^{IV/III}) = 719 mV, and E_{1/2}(Ru^{III/II}) = 180 mV. Anionic MS (CH₃CN-H₂O) : calculated m/z value for [P₂W₁₇O₆₁RuOH₃]₄⁻ = 1070.9331, measured m/z value = 1070.9338.

### Synthesis step 3: Synthesis for K₈ [α₁-P₂W₁₇O₆₁Ru^{II} (dmso)]-4KCl-22H₂O

K₇[P₂W₁₇O₆₁Ru(H₂O)] (a mixture of α₁-form and α₂-form) (0.745 g, 0.43 mmol) obtained in step 2 and dimethyl sulfoxide (dmso, 1 mL, 14.08 mmol) were added to a 49 mL of water and agitated for 4 days at 80°C, and after cooling the resulting reaction liquid, KCl (1.5 g) was added to the reaction liquid, and the reaction liquid was agitated until the added KCl was dissolved therein, and the reaction liquid was allowed to stand for overnight. After filtering out the precipitates generated during standing, KCl (1.5 g) was added to the resulting filtrate. The resulting liquid was agitated for one hour at room temperature, and the resulting solution was allowed to stand for overnight in a refrigerator. The solid matters precipitated during standing were filtered out, a 15 mL of acetone was added to the resulting filtrate, and the liquid was agitated for one hour at room temperature. After filtering out the precipitates generated, a 100 mL of acetone was added to the filtrate, and the resulting liquid was agitated for 30 minutes. The resulting dark-green solution was allowed to stand for overnight in a refrigerator. The solid matters generated during standing were filtered out, were washed with a 100 mL of acetone, and were dried at 70°C to obtain K₈[P₂W₁₇O₆₁Ru^{II} (dmso)] -4KCl-22H₂O (yield: 0.59 g, yield percentage: 80% (weight basis).

### Analysis results:

IR (KBr): ν = 1082 (s), 1015 (m), 946 (m), 906 (s), 820 (vs), 781 (vs), 721 (s) cm⁻¹. UV/Vis (0.5M KH₂PO₄) : λmax = 445 nm (ε = 1.7 × 10³ dm³·mol⁻¹·cm⁻¹) and 597 nm (ε = 2.0 × 10³ dm³·mol⁻¹·cm⁻¹). Cyclic voltammogram (in 0.5M KH₂PO₄ aqueous solution (pH 4.3): E_{1/2}(Ru^{IV/III}) = 1341 mV and E_{1/2} (Ru^{III/II}) = 560 mV. ¹H-NMR (D₂O) : (δ/ppm) 3.16 (s, 3H), 3.08 (s, 3H) (cf. 4.659 for HOD). ¹³C-NMR (D₂O) : (δ/ppm) 44.18, 43.02 (cf. 30.103 for (CH₃)₂CO). ³¹P-NMR (D₂O) : (δ/ppm) -9.67, -12.84. ¹⁸³W-NMR (D₂O) : (δ/ppm) 212.4, 127.4, 35.3, -104.4, -122.4, -127.5, -130.1, -137.1, -154.8, -157.2, -159.0, -169.1, -187.3, -200.9, -204.4, -217.7. Elementary analysis: calculated for K₈[P₂W₁₇O₆₁Ru(C₂H₆SO)]-4KCl-22H₂O: C 0.45; H 0.94; P 1.16; W 58.4; Ru 1.89; K 8.77; Na 0; S 0.60; Cl 2.65%; Measured: C 0.67; H 0.71; P 1.21; W 58.3; Ru 2.05; K 8.94; Na<0.01; S 0.45; Cl 2.54%. Anionic MS (CH₃CN-H₂O): calculated m/z value for [P₂W₁₇O₆₁Ru(dmso)H₂K]⁴⁻ = 1095. 9267, measured m/z value = 1095.9247.

### Synthesis step 4:

K₈[P₂W₁₇O₆₁Ru(C₂H₆SO)] (0.158 g) obtained in synthesis step 3 was mixed with a 5 mL of water, and they were allowed to react in a 100 mL Teflon® inner tube-type autoclave for 20 hours at 170°C. After cooling the resulting reaction liquid, a 20 mL of acetone was added thereto to separate out precipitates. The precipitates were filtered out, were washed with a 20 mL of acetone, and were dried at 70°C to obtain K₇α₁-P₂W₁₇O₆₁Ru(H₂O) (α₁-form).
Analysis: Cyclic voltammogram (in 0.5M KH₂PO₄ aqueous solution (pH 4.3), vs. NHE): E_{1/2}(Ru^{V/IV}) = 1059 mV, E_{1/2}(Ru^{IV/III}) = 716 mV, and E_{1/2}(Ru^{III/II}) = 176 mV.

The analyses of the above intermediate and final products were performed using the following apparatuses and conditions.

Infrared spectroscopic analysis (IR): The measurement apparatus used was NICOLET 6700 FT-IR (manufactured by Thermo Fisher Scientific). The measurement was performed by the KBr pellet method.

Cyclic voltammetry (CV): The measurement apparatus used was CH1620D system (manufactured by BAS Inc.). The measurement temperature was 20°C, the working electrode was glassy carbon, the counter electrode was a platinum wire, the reference electrode was Ag/AgCl (3M NaCl, 203 mV vs. NHE), the initial potential was 403 mV, the switching potential was 1303 mV, and the scan rate was 25 mV/sec. The concentration of the object to be measured was 1 mM in 0.5M KH₂PO₄ aqueous solution (pH 4.3).

Ultraviolet-visible spectroscopic analysis (UV/Vis): The measurement apparatus used was 8453 UV-Vis spectrometer (manufactured by Agilent). The measurement temperature was normal temperature (about 20°C).

Varian system 500 (500 MHz) spectrometer (Agilent) was used for ¹H-NMR, ¹³C-NMR and ³¹P-NMR measurements, and ECA500 (500 MHz) spectrometer was used for ¹⁸³W-NMR measurements. HOD (4.659 ppm) in D₂O was used as an internal standard in the measurements of ¹H-NMR spectra, (CH₃)₂CO (30.103 ppm) was used as an external standard in the measurements of ¹³C-NMR spectra, 85% H₃PO₄ (0 ppm) was used as an external standard in the measurement of ³¹P-NMR spectra, and saturated Na₂WO₄ (0 ppm) was used as an external standard in the measurements of ¹⁸³W-NMR spectra.

The elementary analysis was entrusted to Microanalytisches Labor Pascher, an elementary analysis company in Germany.

For the final product (K₇α₁-P₂W₁₇O₆₁Ru(H₂O) (α₁-form)), a CV measurement was performed in 0.5M H₂SO₄ aqueous solution. The measurement apparatus used was CHI320D system (manufactured by BAS Inc.). The measurement temperature was 20°C, the working electrode was glassy carbon, the counter electrode was a platinum wire, the reference electrode was Ag/AgCl (3M NaCl 203 mV vs. NHE), the initial potential was 403 mV, the switching potential was 1303 mV, and the scan rate was 25 mV/sec. The concentration of the final product in the 0.5M H₂SO₄ aqueous solution was 1 mM.

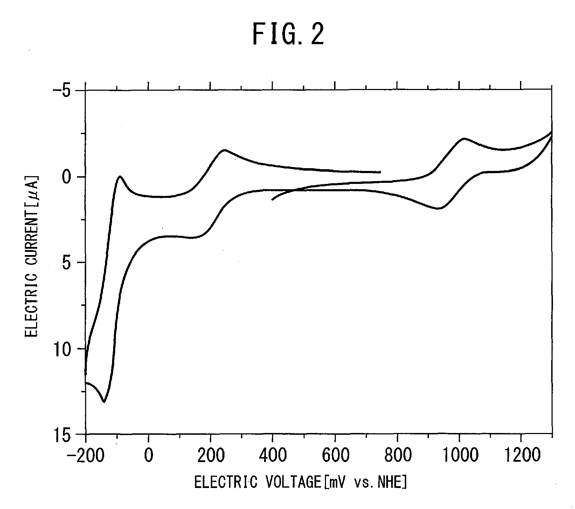

FIG. 2 shows the electric current-voltage curve (cyclic voltammogram) obtained by the CV measurement for K₇α₁-P₂W₁₇O₆₁Ru(H₂O) (α₁-form). As shown in FIG. 2, K₇α₁-P₂W₁₇O₆₁Ru(H₂O) (α₁-form) exhibited reversible redox peaks. The formal redox potentials E^{0'} (= (cathodic peak potential E_{pc}) + (anodic peak potential Eₚₐ)/2) determined from the electric current-voltage curve were +984 mV and +203 mV. Further, the number of electrons participated in the oxidation-reduction, determined from the Nernst equation was respectively 1.

Three sets of peaks are observed in the cyclic voltammogram in FIG. 2.

The one set of peaks at the right side (higher potential side) is attributed to the redox reaction represented by the following formula:

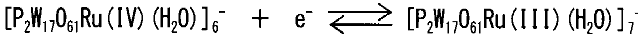

The central one set of peaks is attributed to the redox reaction represented by the following formula:

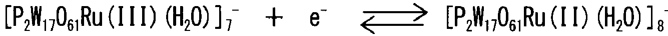

The one set of peaks at the left side (lower potential side) is attributed to the redox reaction represented by the following formula:

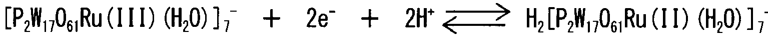

FIG. 2 shows that the ruthenium in the polyoxometalate molecule of the present invention has an electric potential sufficient to oxidize hydrogen, and accordingly the polyoxometalate molecule of the present invention has a high hydrogen oxidizing ability. Further, this molecule dissociates hydrogen with ruthenium as an catalytic active site, thereby produces electrons and protons. This molecule can receive the produced electrons on tungsten, whereas this molecule can receive the produced protons on any oxygen in the molecule. Accordingly, the polyoxometalate compound of the present invention has hydrogen dissociation sites and the sites on which the electrons and protons produced by the hydrogen dissociation are received.

Moreover, it can be seen from the sharp waveform of the cyclic voltammogram that the electron movement and proton movement proceed smoothly.

### Industrial Applicability

The catalyst of the present invention is useful in various applications which employ hydrogen oxidation reaction in which hydrogen molecule is oxidized to hydrogen ions, for example, as a hydrogen oxidation catalyst in fuel cell.

## Claims

1. A hydrogen oxidation catalyst which is formed of a Dawson-type polyoxometalate compound represented by general formula (I):
Xₐ[P₂M_{b}O₆₁Ru_{c}(L)_{d}] (I)
wherein X represents a monovalent cation independently selected from an alkali metal cation, a tetraalkyl ammonium cation and a tetraalkyl phosphonium cation;
M represents a transition metal independently selected from V, Nb, Mo and W;
L represents a ligand independently selected from H₂O and an organic ligand, provided that at least one L is H₂O;
a represents the number of cations X needed for the electrical charge of the overall compound to be neutral;
b is an integer of from 12 to 17 and c is an integer of from 1 to 6, provided that the total of b and c is equal to 18; and
d is an integer which is equal to c.

2. The hydrogen oxidation catalyst according to claim 1, wherein the polyoxometalate compound is K₇[α₁-P₂W₁₇O₆₁Ru (H₂O)].
